# EUROPEAN PATENT APPLICATION

(11) **EP 3 098 709 A1**
(43) Date of publication of application: **30.11.2016**
(21) Application number: 16171356.5
(22) Date of filing: 25.05.2016
(51) Int. Cl.: G06F 3/12

(54) **A METHOD FOR PRINTING A PRINT JOB AND A PRINT SYSTEM**

(30) Priority: 29.05.2015 EP 15169836
(71) Applicant: OCE-Technologies B.V., 5914 CA Venlo (NL)
(72) Inventor: VERDUIN, Pieter, 5914 CA Venlo (NL); GERRITS, Antonius Maria, 5914 CA VENLO (NL)
(74) Representative: van der Elsen, Jacobus Theodorus Henricus

(57) **Abstract**

The invention relates to a method for printing a print job on a printing system configured by means of printing system settings, the printer comprising a print engine and a control unit comprising a scheduler for scheduling the print job in time, the print job having a plurality of print job settings, the method comprising the steps of receiving a print job, determining a range of possible print job durations for the print job based on at least one group of settings out of the group of printing system settings, the group of the print job settings and the group of settings for a change-over time between print jobs of a pair of subsequent print jobs, determining a minimum of the range to be an optimistic print job duration for the print job, determining a maximum of the range to be a pessimistic print job duration for the print job, selecting a print job duration for the print job out of the optimistic print job duration and the pessimistic print job duration, based on a selection criterion, scheduling the print job by the scheduler in a scheduling scheme according to the selected print job duration, and printing the print job according to the scheduling scheme.

## Description

### FIELD OF THE INVENTION

The invention relates to a method for printing a print job on a printing system configured by means of printing system settings, the printer comprising a print engine and a control unit comprising a scheduler for scheduling the print job in time, the print job having a plurality of print job settings, the method comprising the step of receiving a print job.

### BACKGROUND OF THE INVENTION

When scheduling a print job in the scheduler of the control unit of the printer, an estimation of the print job duration is done by an algorithm which may be derived from a simplified model of the complete printing system. When designing the model not everything is known and alternative choices have to be made on the behavior of the printer. While implementing the derived algorithm choices have to be made about interpretation of the model.

For example, there will be tolerances in the specifications for printing speed or finishing speed. Here one may use either a value minus or plus the tolerance.
Furthermore some actions may be done in the printing system that may either parallel or in series depending on detailed behavior.
For example, a time delay due to a media switch from a tray with different media may sometimes be fully productive and sometimes it leads to a small time delay.

For example, for a job that uses two kinds of media every odd sheet is specified to be printed on a first media and every even sheet is specified to be printed on a second media. The printing system has two media input modules with multiple media drawers. Switching from trays within one media module can be done fully productive. But switching trays between modules is not fully productive.
When the job arrives in the system these two kinds of media may not yet be loaded in the system. Therefore it is not possible to calculate what kind of switching will occur (productive or not) as the assignment of media to trays has not yet been done or can change before printing of this job starts.
Moreover it may happen that the first media is loaded in a first media module and in a second media module and the second media is loaded in the first paper module. In case the model is rather simple, it may not know whether the engine will switch between paper trays in the same paper module or between trays if different paper modules.

In another example it is possible that when changing plexity in the middle of a job it is not possible by the simple model - as this may have no detailed knowledge on the exact sheet scheduling in the printing system - to predict if the physical flipping of a sheet will cause a time delay or not (e.g. there is a time delay when the switch occurs when a duplex loop in the printing system is not completely filled and there is no time delay when the duplex loop is completely filled.). In this case the minimum job duration will assume no time penalty and the maximum job duration will always assume that a penalty occurs.

In another example, the print job duration may depend on how the printing system schedules print engine calibrations, e.g. every 1000 pages. A 1500 page job may experience one or two of these calibrations. The duration of the calibration then adds to the difference between a lower job duration time and a higher job duration time. It might even be so that a frequency of the calibration is not exactly known but that it is possible to give an upper and a lower limit for the frequency of the calibration. These upper and lower limits may then be used to calculate minimum and maximum job durations. It is even possible that some calibrations may be done in parallel or not in certain conditions. Assumptions about the calibration steps actually lead to different values for minimum and maximum job durations.

In most cases choices made by the simplified model are made equal for each print job arriving at the printer and these choices are implemented as a plurality of predetermined system settings of the printer. This gives a lesser flexibility to treating print jobs which have a different intent depending on a type of print job, a type of ordering, a type of customer, a type of payment method or a type of shipment deadline. For example, the intent may be a productive - read cheaper - way of working or a time-restrictive way of working in case of a deadline for the print job.

The object of the invention is to provide a method that can deal with print jobs having different intents. Another object is to provide a print system in which the method is implemented.

### SUMMARY OF THE INVENTION

For this purpose, a method according to the invention comprises the steps of determining a range of possible print job durations for the print job derived from alternative choices to be made in a simplified model of the printing system, the choices based on at least one group of settings out of a group of printing system settings, a group of the print job settings, a group of settings for a change-over time between print jobs of a pair of subsequent print jobs, a group of maintenance settings for maintenance of the printing system a group of experience data with respect to print stops of the printing system, a group of tolerances on values of the printing system settings and a group of tolerances on values of the print job settings, determining a minimum of the range to be an optimistic print job duration for the print job, determining a maximum of the range to be a pessimistic print job duration for the print job, selecting a print job duration for the print job out of the optimistic print job duration and the pessimistic print job duration based on a selection criterion, scheduling the print job by the scheduler in a scheduling scheme according to the selected print job duration, and printing the print job according to the scheduling scheme.

If an operator wants to know how long he can definitely stay away before he needs to do some action at the printer, in order to prevent that the printing system is unnecessarily idle, the determination of the print job duration should be an optimistic print job duration. Such an optimistic print job duration is normally by default determined for a print job arriving at the printing system. However, there are also print jobs, where the operator needs to answer a question like on what time the print job is guaranteed to be ready for pick up. Such a print job needs a pessimistic print job duration determination. Based on a selection criterion, like a deadline for a print job, the selection of the print job duration out of an optimistic print job duration and a pessimistic print job duration may be done automatically by the printing system after the print job is received by the printing system.

According to an embodiment the scheduling step for the print job, if a pessimistic print job duration is selected for the print job, comprises the steps of for each previous print job, for which an optimistic print job duration is selected and which is scheduled before the print job, selecting the pessimistic print job duration corresponding to the previous print job, and rescheduling the previous print job according to the selected pessimistic print job duration determined for the previous print job.

According to a further embodiment the step of for each previous print job rescheduling the previous print job comprises the step of leaving the previous print job at the same position in a print job queue of the scheduled previous print jobs.

According to an embodiment the method comprises the step of changing the print order of a previous print job for which an optimistic print job duration is selected and a later print job for which a pessimistic print job duration is selected.
According to an embodiment the method comprises a step of displaying the scheduling scheme of scheduled print jobs according to the respective optimistic or pessimistic print job duration.

According to an embodiment the method comprises the step of determining a difference of the pessimistic print job duration and the optimistic print job duration of the print job and displaying the difference in the displayed scheduling scheme of the scheduled print jobs.

According to an embodiment the selection criterion is whether or not the plurality of print job settings comprises a deadline print job setting for a deadline for deliverance of the print job. For a print job having a deadline preferably a pessimistic print job duration is selected. A deadline for a print job may be derived from the print job settings or from digital or analogue notes for the operator accompanying to the print job.

According to a further embodiment the printing system has a user interface and the method comprises the step of receiving the deadline print job setting via user input by means of the user interface. In this manner the operator may select for each print job to be scheduled or already scheduled in the print job queue an optimistic print job duration or a pessimistic print job duration.

According to another further embodiment the printing system has an interface with a management information system and the method comprises the step of receiving the deadline print job setting via the interface with the management information system.

According to an embodiment the selection criterion is at least partially based on a customer of the print job. Print jobs for customers which are important for the business may be preferably scheduled with a pessimistic print job duration to be sure that the ready time of the print job that is then scheduled according to the pessimistic print job duration and may be communicated to the customer will be achieved with a very large degree of certainty. The customer of the print job may be an end customer who receives and/or pays for the end print product or a logistic company which transports the end print product to the end customer.

According to an embodiment the selection criterion is at least partially based on at least one out of a part of the day of printing the print job, a part of the week of printing the print job, a part of the month of printing the print job, and a part of a year of printing the print job. For example, a system wide criterion of scheduling optimistically in the morning and pessimistically in the afternoon may be automatically set during scheduling of the print job. For example, a system wide criterion of scheduling pessimistically on a Monday or a day after a holiday and optimistically for the other days of the week may be automatically set during scheduling of the print job.

The invention also relates to a printing system for printing a print job having a plurality of print job settings, the printing system comprising a print engine, a control unit comprising a scheduler configured to schedule the print job in time, a receiving section configure to receive the print job, a determining section configured to determine an optimistic and a pessimistic print job duration for the print job derived from alternative choices to be made in a simplified model of the printing system, a selecting section configured to select, based on a selecting criterion, a print job duration for the print job out of the optimistic print job duration and the pessimistic print job duration, the scheduler being configured to schedule the print job in a scheduling scheme according to the selected print job duration, and the print engine configured to print the print job according to the scheduling scheme, wherein the control unit is configured to execute a method according to the invention.

The invention further relates to a recording medium comprising computer executable program code configured to instruct a computer to perform a method according to the invention.

### BRIEF DESCRIPTION OF THE DRAWINGS

The invention will now be explained further with reference to the Examples indicated below.
Figure 1 shows the general arrangement of the printing system according to the invention.
Figures 2, 4 - 6 show examples of a print job schedule according to the invention. Figure 3 shows an optimistic print job duration and a pessimistic print job duration for the print job according to a method of the invention.
Figure 7 shows a flow diagram of an embodiment of the method according to the invention.

### DETAILED DESCRIPTION OF EMBODIMENTS

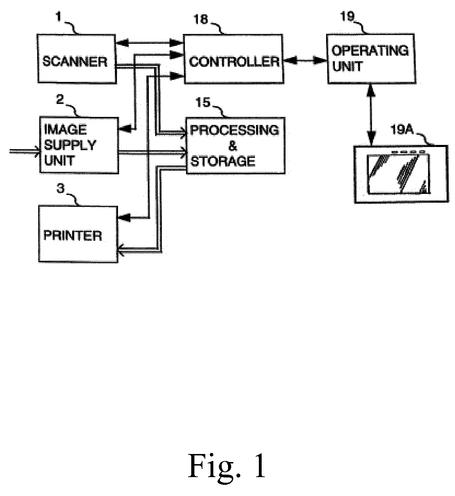

Figure 1 shows the general arrangement of a printing system according to the invention. The print system comprises a scanner 1 for opto-electrical scanning of a document and delivering digital image information corresponding thereto, a feeder 2 for feeding image information from an external source to the print system and a print engine 3 for printing digital image information on a receiving material. The feeder 2 is configured to receive a print job with a print job ticket comprising a plurality of print job settings. Both the scanner 1 and the feeder unit 2 are connected to a device 15 for processing and intermediate storage of image information, which is in turn connected to the print engine 3. The scanner 1, feeder unit 2, device 15 and print engine 3 are connected to a central control 18, which is also connected to an operator control unit 19 provided with an operator control panel 19A with operator control elements and a display element, for example an LCD screen in the form of a touch screen for use by an operator at the printing system. The operator control panel 19A may be remotely wireless connected to the printing system. The central control 18 comprises a print job queue for ordering the print jobs which are submitted to the printing system via the feeder 2.The operating control unit 19 gathers information from the central control 18 and the device 15 in order to display the gathered information at the operator control panel 19A. The central control 18 comprises a storage for a plurality of printing system settings. The printing system settings determine a pre-printing process like a ripping process of a print job, a print process by the print engine 3, and a post-printing process like an inline finishing step. An additional digital management system may be connected to the printing system in order to deliver a group of settings for a change-over time between print jobs of a pair of subsequent print jobs to the central control 18. According to another embodiment the change-over time settings may be derived from the print job settings of the pair of subsequent print jobs and/or from the printing system settings.

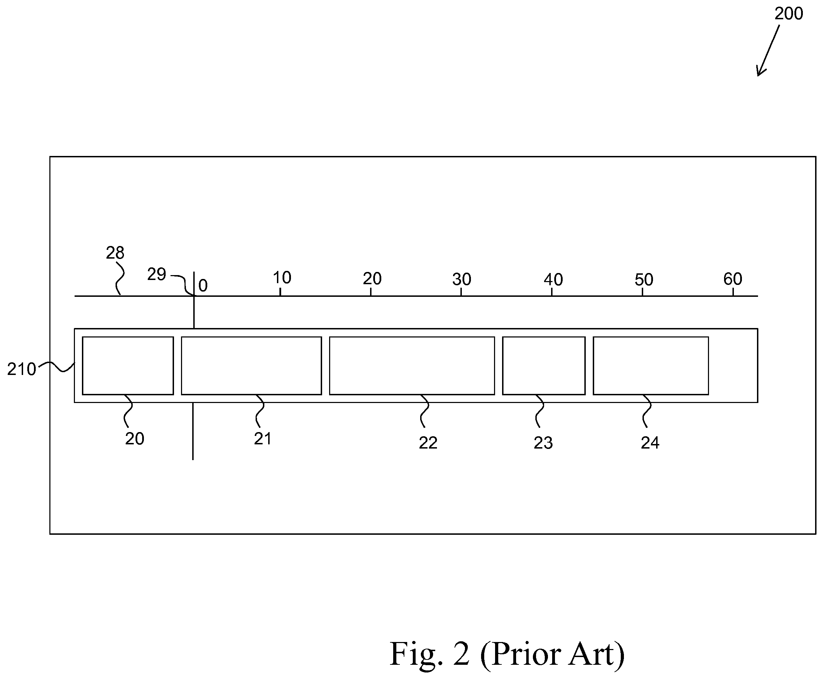

Figure 2 shows a print job queue representation according to the prior art. Figure 2 shows a user interface window 200 comprising a digital representation of the print job queue 210 residing in the central control 18 at the operator control panel 19A (See Figure 1).
The print job queue may be implemented in memory means of the central control 18, for example as linked lists of objects representing print jobs.

In Figure 2 the print jobs in the print job queue 210 are represented by subsequent rectangles 21 - 24. Each rectangle is representing a print job in the print job queue. The order of the rectangles corresponds to the order of the print jobs in the print job queue. The size of a rectangle corresponds to a time needed to print and to finish the corresponding print job. An operator may be able to move or drag the image item representing a first print job file from one position in the print job queue representation to another position in the print job queue representation in order to move the first print job from one position in the print job queue corresponding to the one position in the print job queue representation to another position in the print job queue corresponding to the other position in the print job queue representation.

Figure 2 shows the window 200 displayed on the screen of display unit 19. A display unit of this kind is also referred to as a user interface. The window 200 is a representation of the scheduler according to the invention. The window 200 comprises a print job 20 which has already been processed, the print jobs 21 - 24 in the print job queue of the printing system according to the invention and a time line 28. The time line 28 comprises a moment in time 29 also known as "now". The time scale of the time line 28 may be in units of seconds, minutes, hours or any other suitable unit of time. In Figure 2 the time scale is assumed to be in minutes from "now". The print job 20 has already been processed. A current print job 21 is being processed at the moment of "now" and will be ready after approximately 15 minutes from "now". The time line may also be accompanied by time ticks representing absolute moments in time instead of relative moments in time from "now". The moment in time "now" may be represented as a zero time ("0") or as an absolute time according to a clock time which is frequently updated, for example "11:45 AM".
A print job 22 is scheduled after the current print job 21. A print job 23 is scheduled after print job 22. A print job 24 is scheduled after print job 23. Print jobs 21 - 24 will all be ready within one hour from "now". It is noted that the window 200, in particular image 210 is changing dynamically, i.e. at predetermined time intervals which are relatively small with respect to the time scale of the time line 28, for example in milliseconds, seconds or the like. The displayed print job durations of the print jobs 21 - 24 are 17, 20, 10, 13 minutes respectively.

According to the method of the invention for each received print job a range of print job durations is determined based on at least one group of settings out of the group of printing system settings, the group of the print job settings and the group of settings for a change-over time between print jobs of a pair of subsequent print jobs.

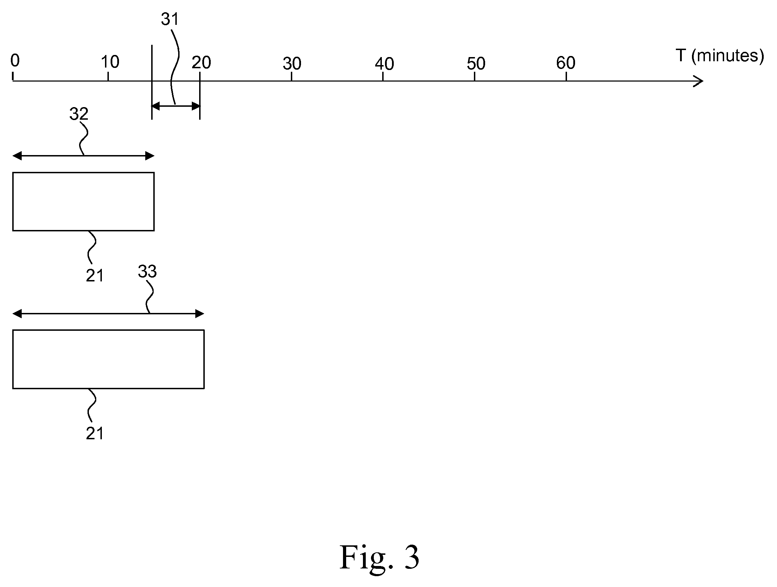

Figure 3 shows a range 31 of print job durations for print job 21. The range 31 has a minimum value 32 and a maximum value 33. The minimum value 32 will hereinafter be referenced to as an optimistic print job duration 32 for the print job 21. The maximum value 33 will hereinafter be referenced to as a pessimistic print job duration 33 for the print job 21. In Figure 2 the print job 21 is automatically scheduled according to the optimistic print job duration 32.

According to the method of the invention a print job duration for a print job is selected out of the optimistic print job duration and the pessimistic print job duration based on a selection criterion. Such a selection criterion may be the presence of a deadline for a print job.

Suppose that print job 22 has a deadline, the control unit of the printing system according to the invention will select a pessimistic print job duration for the print job 22 in the scheduler 210.
To be more certain that the print job 22 will be ready at a time that will be scheduled - and perhaps communicated - the pessimistic print job duration 33 will be selected for the previous print job 21. The previous print job 21 which has been originally scheduled with the optimistic print job duration 32 will now be rescheduled with the pessimistic print job duration 33.

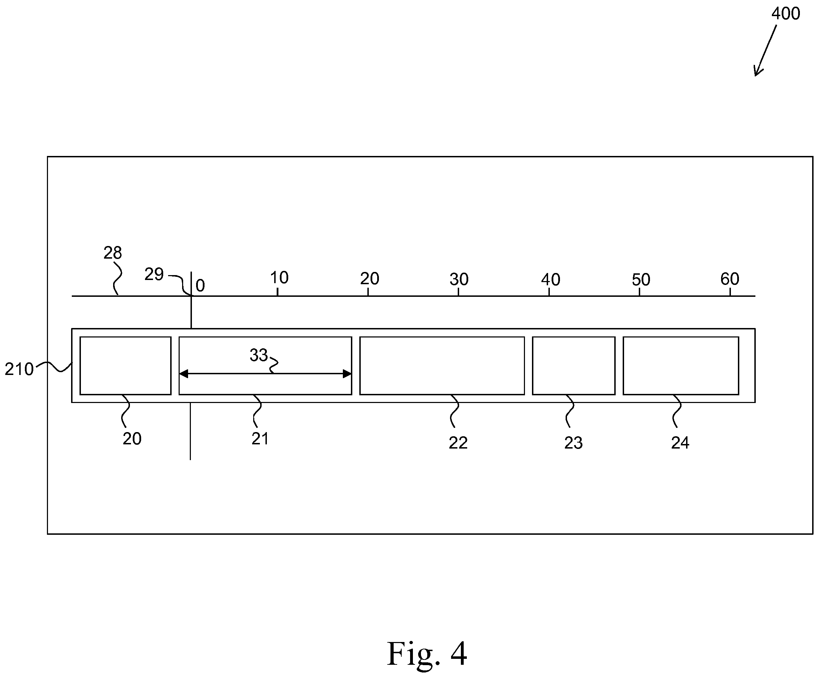

Figure 4 shows in a user interface window 400 the new scheduler 210 after rescheduling print job 21 with the pessimistic print job duration 33.

According to an alternative embodiment for each print job scheduled with a pessimistic print job duration also the optimistic print job duration will be made visible in the user interface window.

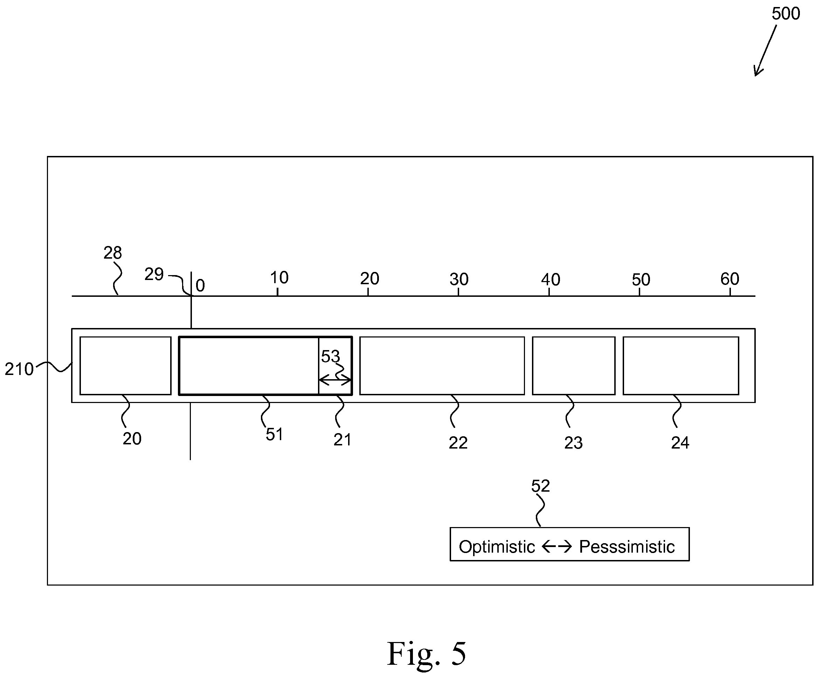

Figure 5 shows a user interface window 500 with the print job 21 scheduled with a pessimistic print job duration 33. Also a smaller rectangle 51 inside the rectangle of the print job 21 is displayed. The smaller rectangle 51 corresponds to the optimistic print job duration determined - but not selected - for print job 21. The operator can immediately see what is the difference 53 in time between the optimistic print job duration and the pessimistic print job duration of print job 21. According to an alternative embodiment the difference 53 is only shown for print jobs in the print job queue for which a pessimistic print job duration is selected. The pessimistic print job duration may be overruling an originally planned optimistic print job duration.

In a further embodiment the user interface window 500 comprises a toggle button 52 which can be used to toggle between an optimistic print job duration and a pessimistic print job duration of at least one print job in the print job queue which is selected by touch of or mouse click in the scheduler 210 of the user interface window 500.

According to an embodiment the print order is changed of a previous print job for which an optimistic print job duration is selected and a later print job for which a pessimistic print job duration is selected. The change may be a swap of the previous print job and the later print job or another change in order by which the later print job is planned to be printed before the previous print job.

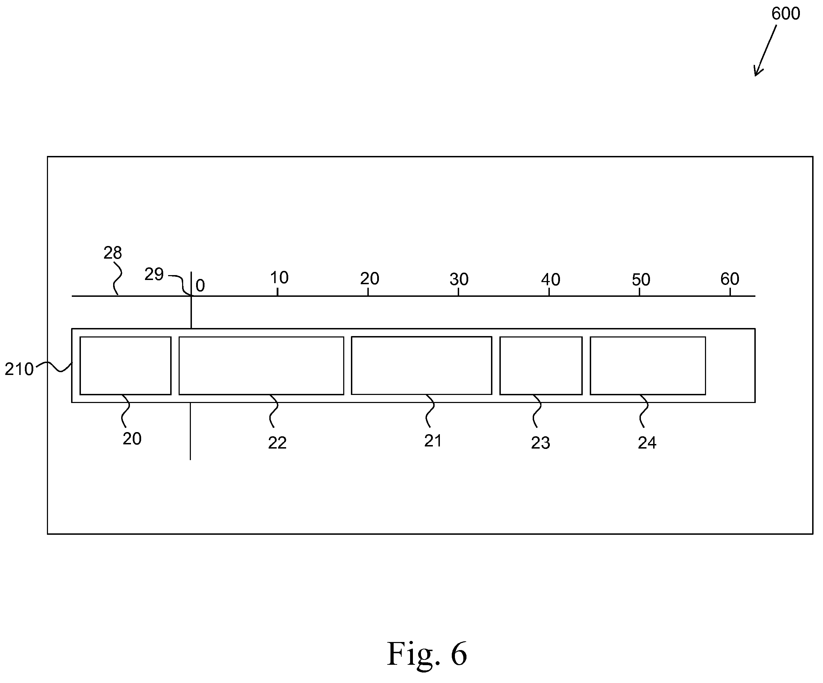

Figure 6 shows a user interface window 600 wherein the print order of the print job 21 scheduled with an optimistic print job duration and the print job 22 scheduled with an pessimistic print job duration is changed. The print job 22 scheduled with the pessimistic print job duration will be printed before the print job 21 scheduled with an optimistic print job duration. By doing so, the optimistic print job duration of print job 21 need not be rescheduled into a pessimistic print job duration for the print job 21 as according to a previous embodiment of the method as shown in Figure 4.

In an alternative embodiment the print job settings of a selected print job may be displayed when touching or right mouse clicking on a print job in the print job queue 210. One of the print job settings may be a setting for an optimistic print job duration or pessimistic print job duration. The value of the setting may be initially automatically selected and set by the central control of the printing system according to the invention taking the selection criterion into account when the print job is received at the printing system.

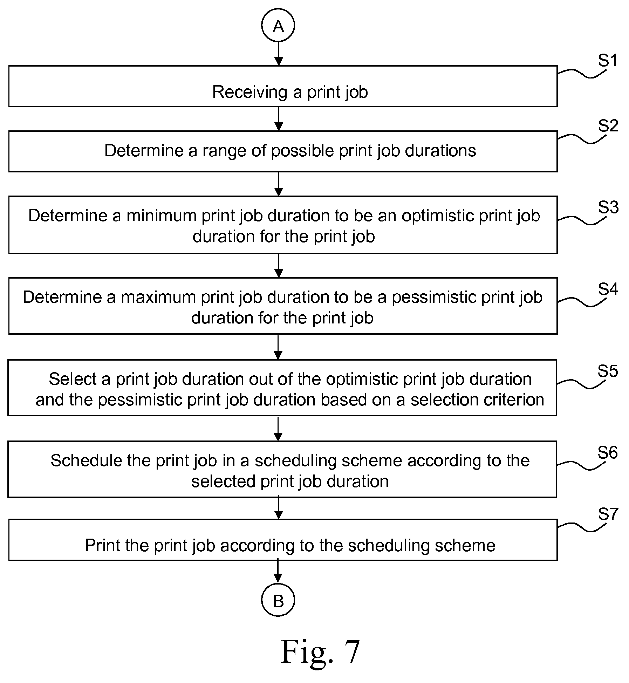

Figure 7 shows a flow diagram of an embodiment of the method according to the invention.

The method starts in a starting point A and proceeds to a first step S1.

In the first step S1 a print job is received at the receiving section of the printing system. In a second step S2 a range of possible print job durations for the print job is determined. The determination of the range is based on at least one group of settings out of a group of printing system settings, a group of the print job settings, a group of settings for a change-over time between print jobs of a pair of subsequent print jobs, a group of maintenance settings for maintenance of the printing system and a group of experience data with respect to print stops of the printing system.

In a third step S3 a minimum of the range to be an optimistic print job duration for the print job is determined.

In a fourth step S4 a maximum of the range to be a pessimistic print job duration for the print job is determined.

The pessimistic print job duration for a print job and an optimistic print job duration for a print job is always determined in such a way that the actual print job duration will be in between the optimistic print job duration and the pessimistic print job duration. It is noted that the pessimistic print job duration is determined not to be smaller than the actual print job duration of a print job.

In a fifth step S5 a print job duration for the print job is selected out of the optimistic print job duration and the pessimistic print job duration, based on a selection criterion.

In a sixth step S6 the print job is scheduled by the scheduler in a scheduling scheme according to the selected print job duration.

In a seventh step S7 the print job is printed according to the scheduling scheme.

The method ends in end point B.

The second step S2 of determining a range of possible print job durations for the print job and the next steps S3 - S6 preferably may be repeated when the print job has not yet been printed and at least one relevant setting of settings out of a group of printing system settings, a group of the print job settings, a group of settings for a change-over time between print jobs of a pair of subsequent print jobs, a group of maintenance settings for maintenance of the printing system and a group of experience data with respect to print stops of the printing system, is changed.
Such a change may be a result of editing the print job, editing a printing system setting, adapting a maintenance setting, adapting the experience data, adapting change-over times, etc.

The fifth step S5 and the sixth step S6 preferably may be repeated when a scheduled print job is not yet printed and moved in the scheduling scheme by the scheduler.

By identifying different kinds of print jobs, selecting print job duration based on a selection criterion and using different determinations designed for a purpose of the print job the scheduler gets closer to the goal set by the customer, user and/or operator, being either maximizing output of the print engine, or guaranteeing that certain print jobs are delivered on time, and combining those two goals into one scheduling scheme.

## Claims

1. Method for printing a print job on a printing system configured by means of printing system settings, the printer comprising a print engine and a control unit comprising a scheduler for scheduling the print job in time, the print job having a plurality of print job settings, the method comprising the steps of
a) receiving a print job,
b) determining a range of possible print job durations for the print job derived from alternative choices to be made in a simplified model of the printing system, the choices based on at least one group of settings out of a group of printing system settings, a group of the print job settings, a group of settings for a change-over time between print jobs of a pair of subsequent print jobs, a group of maintenance settings for maintenance of the printing system, a group of experience data with respect to print stops of the printing system, a group of tolerances on values of the printing system settings and a group of tolerances on values of the print job settings,
c) determining a minimum of the range to be an optimistic print job duration for the print job,
d) determining a maximum of the range to be a pessimistic print job duration for the print job,
e) selecting a print job duration for the print job out of the optimistic print job duration and the pessimistic print job duration, based on a selection criterion,
f) scheduling the print job by the scheduler in a scheduling scheme according to the selected print job duration, and
g) printing the print job according to the scheduling scheme.

2. Method according to any of the preceding claims, wherein the scheduling step for the print job, if a pessimistic print job duration is selected for the print job, comprises the steps of for each previous print job, for which an optimistic print job duration is selected and which is scheduled before the print job,
selecting the pessimistic print job duration corresponding to the previous print job, and rescheduling the previous print job according to the selected pessimistic print job duration determined for the previous print job.

3. Method according to claim 2, wherein the step of for each previous print job rescheduling the previous print job comprises the step of leaving the previous print job at the same position in a print job queue of the scheduled previous print jobs.

4. Method according to any of the preceding claims, wherein the method comprises the step of changing the print order of a previous print job for which an optimistic print job duration is selected and a later print job for which a pessimistic print job duration is selected.

5. Method according to any of the preceding claims, wherein the method comprises a step of displaying the scheduling scheme of scheduled print jobs according to the respective optimistic or pessimistic print job duration.

6. Method according to claim 5, wherein the method comprises the step of determining a difference of the pessimistic print job duration and the optimistic print job duration of the print job and displaying the difference in the displayed scheduling scheme of the scheduled print jobs.

7. Method according to any of the preceding claims, wherein the selection criterion is whether or not the plurality of print job settings comprises a deadline print job setting for a deadline for deliverance of the print job.

8. Method according to claim 7, wherein the printing system has a user interface and the method comprises the step of receiving the deadline print job setting via user input by mean of the user interface.

9. Method according to claim 7, wherein the printing system has an interface with a management information system and the method comprises the step of receiving the deadline print job setting via the interface with the management information system.

10. Method according to any of the preceding claims, wherein the selection criterion is at least partially based on a customer of the print job.

11. Method according to any of the preceding claims, wherein the selection criterion is at least partially based on at least one out of a part of the day of printing the print job, a part of the week of printing the print job, a part of the month of printing the print job, and a part of a year of printing the print job.

12. Printing system for printing a print job having a plurality of print job settings, the printing system comprising a print engine, a control unit comprising a scheduler configured to schedule the print job in time, a receiving section configure to receive the print job, a determining section configured to determine an optimistic and a pessimistic print job duration for the print job derived from alternative choices to be made in a simplified model of the printing system, a selecting section configured to select, based on a selecting criterion, a print job duration for the print job out of the optimistic print job duration and the pessimistic print job duration, the scheduler being configured to schedule the print job in a scheduling scheme according to the selected print job duration, and the print engine configured to print the print job according to the scheduling scheme, wherein the control unit is configured to execute a method according to any of claims 1 - 11.

13. Recording medium comprising computer executable program code configured to instruct a computer to perform a method according to any of the claims 1 - 11.
